(19) Europäisches Patentamt
European Patent Office
Office européen des brevets

(11) **EP 2 532 471 A2**

(12) **EUROPÄISCHE PATENTANMELDUNG**

(43) Veröffentlichungstag:
**12.12.2012 Patentblatt 2012/50**

(51) Int Cl.:
***B23K 35/28*** *(2006.01)*    ***B23K 35/36*** *(2006.01)*
***C22C 21/00*** *(2006.01)*

(21) Anmeldenummer: **12003234.7**

(22) Anmeldetag: **03.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **09.06.2011  DE 102011103641**
**09.06.2011  DE 202011101606 U**

(71) Anmelder: **Erbslöh Aluminium GmbH**
**42553 Velbert (DE)**

(72) Erfinder:
• **Sucke, Norbert William**
  **47269 Duisburg (DE)**
• **Breindl, Reineer**
  **45527 Hattingen (DE)**
• **Löchte, Lothar, Dr.**
  **40597 Düsseldorf (DE)**
• **Grzesik, Martin**
  **44137 Dortmund (DE)**

(74) Vertreter: **Patentanwälte**
**Buse, Mentzel, Ludewig**
**Kleiner Werth 34**
**42275 Wuppertal (DE)**

(54) **Korrosionsgeschütztes System für einen Wärmetauscher**

(57)   Die Erfindung betrifft ein verbessertes korrosionsgeschütztes System für einen Wärmetauscher aus Aluminiumbauteilen, nämlich einen Wärmetauscher mit mehreren parallel zueinander angeordneten Profilen, welche endseitig in je einen Sammler (Header) münden sowie mit zwischen den Profilen angeordneten Lamellen. Das Profil besteht aus einer 3xxx-Alumium-Legierung, bei welcher der Anteil an gelöstem Kupfer in der Legierung und der Anteil an gelöstem Mangan in der Legierung einem gewählten Korrosionsschutzäquivalent entsprechen und wobei das Flussmittel eine Mischung aus einem Kaliumfluormetallat und Lithiumfluormetallat ist. Hierdurch wird erreicht, dass einerseits Korrosionserscheinungen durch wasserlösliche Flussmittelreste und andererseits selektive Korrosionserscheinungen im Bereich der Lötnaht zwischen Lamelle und Profil des Wärmetauschers verhindert werden.

EP 2 532 471 A2

**Beschreibung**

Die Erfindung betrifft ein korrosionsgeschütztes System für einen Wärmetauscher aus Aluminiumbauteilen, nämlich einen Wärmetauscher mit mehreren parallel zueinander angeordneten Profilen, welche endseitig in je einen Sammler (Header) münden sowie mit zwischen den Profilen angeordneten Lamellen.

Es ist bekannt, einen solchen Wärmetauscher aus Bauteilen aus Aluminium oder Aluminiumlegierungen durch Verlöten dieser Teile herzustellen, insbesondere durch Hartverlöten. Für dieses Hartverlöten wird ein Lot und ein Flussmittel verwendet, die separat, als Mischung oder als Verbindungskomplex, auf die Oberflächen der miteinander zu verlötenden Bauteile aufgetragen werden, insbesondere auf die durch Strangpressen hergestellten, aus Aluminium bestehenden Profile. Das Lot-Flussmittel-Gemisch kann entweder trocken, als Paste oder als wässerige Suspension auf die zu verbindenden Bauteile aufgebracht werden, wobei die trockene Aufbringung (Dry Fluxing) bevorzugt wird, da das Aufbringen einer Suspension ein nachfolgendes Trocknen der Bauteile notwendig macht und die im Kreislauf geführten Flussmittel-Aufschlämmungen Verunreinigungen aufnehmen können. Dies kann bei einem Beschichten mit einem trockenen Flussmittel-Gemisch vermieden werden. Bei einem solchen Dry Fluxing wird das trockene Flussmittelpulver und Lotpulver beispielsweise elektrostatisch auf die Bauteile aufgebracht. Mit bekannten Flussmitteln, insbesondere auf der Basis von Kaliumfluormetallaten werden bereits gute Ergebnisse erzielt. Gleichwohl zeigen sich bei dem bisher verwendeten Flussmittel Korrosionserscheinungen an den Wärmetauschern, insbesondere in feuchter Atmosphäre. Die auf der Oberfläche des Wärmetauschers vorhandene Feuchtigkeit kann dazu führen, dass Flussmittelreste in dem feuchten Oberflächenfilm gelöst werden, sichtbar an einer Eintrübung des wässrigen Oberflächenfilms. Diese wasserlöslichen Phasen müssen unterbunden werden, da diese zu nichtneutralen Lösungen auf den befeuchteten Oberflächenbereiche führen, was an den betroffenen Stellen eines beschichteten Wärmetauscher-Bauteils eine Korrosion unterstützen kann.

Zur Erhöhung des Korrosionsschutz werden die Oberflächen von Wärmetauscher-Bauteilen, insbesondere von Wärmetauscher-Profilen, zusätzlich mit Zink oder Zink freisetzenden Verbindung beschichtet, so dass nach dem Löten das Zink die Lötverbindung oder die gesamte Oberfläche der miteinander zu verlötenden Bauteile des Wärmetauschers abdeckt und die aus Aluminium oder einer Aluminiumlegierung bestehenden Bauteile des Wärmetauschers besser gegen Korrosion geschützt sind. Es hat sich jedoch gezeigt, dass auch die Beschichtung mit Zink nachteilig sein kann, wenn sich insbesondere an der Verbindungsstelle zwischen Lamelle und den Profilen des Wärmetauschers zu viel Zink aus der Zinkbeschichtung anreichert. Eine solche Aufkonzentrierung des Zinks im Bereich der Lötnaht führt beim Lötprozess zu einer elektrochemischen Potentialverschiebung, welche das Profil an dieser Stelle zu einer Opferanode macht. Dies führt in nachteiliger Weise zu lokalen Korrosionserscheinungen und zur beschleunigten Ablösung der Lamelle vom Profil des Wärmetauschers, was die Wärmeaustauschleistung beeinträchtigt. Den Anteil des Zinks in der Lotbeschichtung zu verringern, bedeutet jedoch Einfluss auf den Korrosionsschutz des gesamten Systems zu nehmen.

Aufgabe der vorliegenden Erfindung ist es daher, ein verbessertes korrosionsgeschütztes System für einen Wärmetauscher zur Verfügung zu stellen, bei dem Korrosionserscheinungen durch wasserlösliche Flussmittelreste einerseits und selektive Korrosionserscheinungen im Bereich der Lötnaht zwischen Lamelle und Profil des Wärmetauschers andererseits verhindert werden.

Diese Aufgabe wird mit einem korrosionsgeschützten System für einen Wärmetauscher mit den Merkmalen des Anspruchs 1 gelöst. Ein solcher Wärmetauscher besteht aus mehreren Bauteilen aus unterschiedlichen Aluminiumlegierungen, nämlich mehreren parallel zueinander angeordneten Profilen für das fluide Wärmeaustauschmedium. Diese Profile münden endseitig in einen Sammler (Header). Zwischen den Profilen sind zur Erhöhung der Wärmeaustauschleistung Lamellen angeordnet. Die Profile des Wärmeaustauschers, die Lamellen und die Sammler-Profile bestehen aus unterschiedlichen Aluminiumlegierungen. Die Aluminiumlegierungen sind so gewählt, dass durch Korrosion zuletzt die Profile des Wärmetauschers angegriffen werden. Für die Profile wird in bekannter Weise die edelste Aluminiumlegierung ausgewählt. Diese Aluminiumlegierung ist edler als die Aluminiumlegierung für den Sammler und die Aluminiumlegierung für den Sammler ist wiederum edler als die Aluminiumlegierung für die Lamellen. Dies bewirkt, dass ein Korrosionsangriff zuerst die Lamellen beeinträchtigt, dann die vergleichsweise dickwandigen Sammler, bevor die das Wärmeaustauschmedium durchfließenden Profile einem Korrosionsangriff ausgesetzt sind. Für die Profile wird erfindungsgemäß eine 3xxx-Aluminium-Legierung verwendet, bei welcher der Anteil an gelöstem Kupfer in der Legierung ($c_{Cu}$) und der Anteil an gelöstem Mangan in der Legierung ($c_{Mn}$) so gewählt werden, dass ein Korrosionsschutzäquivalent eingehalten wird. Es gilt

$$c_{\text{äquivalent}} = (1{,}2 \text{ x } c_{Cu}) + (1{,}0 \text{ x } c_{Mn}) \geq 0{,}45\ \%.$$

Insbesondere wird eine 3xxx-Aluminium-Legierung eingesetzt, die kein Kupfer oder einen Anteil an gelöstem Kupfer ($c_{Cu}$) in der Aluminium-Legierung bis einschließlich 0,55 Gew% enthält. Der Anteil an Kupfer in der Aluminiumlegierung verbessert an sich nicht die Korrosionseigenschaften der Aluminiumlegierung. Es wird lediglich die auftretende Korrosionsform verändert und das elektrochemische Potential verschoben. Ist kein Kupfer oder sind nur sehr geringe Anteile an Kupfer in der Legierung enthalten, so neigt die Aluminiumlegierung zu Lochfraßkorrosion. Die erfindungsgemäßen Anteile an Kupfer in den Legierungen führen, wenn Korrosionserscheinungen auftreten sollten, zu einer Kontalctkorrosion. Diese ist im Gegensatz zu der punktuell auftretenden Lochfraßkorrosion eine über die gesamte Oberfläche gleichmäßig verteilte Korrosionserscheinung, die Aluminiumbauteile in wesentlich geringerem Maße negativ beeinflusst. Mehr als 0,55 Gew% Kupfer sollte der Legierung nicht zugegeben werden, da sich ansonsten die Verpressbarkeit aufgrund auftretender AlCu-Phasen verschlechtert.

Der Anteil an Mangan ($c_{Mn}$) in der Aluminiumlegierung soll zwischen 0,4 Gew% und 1.0 Gew% betragen, wobei die Grenzwerte eingeschlossen sind. Mangan soll möglichst in gelöster Form vorliegen. Mangan ist als Legierungselement zur Festigkeitssteigerung in der Aluminiumlegierung und beeinflusst die mechanischen Eigenschaften. Sehr hohe Mangangehalte führen zu größeren Ausscheidungen in der Legierung, die dann als Korrosionselemente wirken können. Zudem sind Aluminiumlegierungen mit hohen Anteilen an Mangan relativ schlecht umformbar, d.h. eine solche Aluminiumlegierung kann nur mit geringer Pressgeschwindigkeit zu Profilen verarbeitet werden, was insbesondere bei den dünnwandigen Wärmetauscher-Profilen zu einem hohen Werkzeugverschleiß führt. Durch die gewählten Anteile an Mangan weist die Legierung eine ausreichende Festigkeit bei guter Umformbarkeit auf.

Des Weiteren werden die Anteile an Eisen und Silizium in der gewählten Aluminiumlegierung niedrig gehalten, nicht mehr als 0,10 Gew% Silizium sowie 0,20 Gew% Eisen. Als Kornfeinerungsmittel kann die Legierung auch Legierungselemente wie Zirkonium oder Titan in geringen Mengen enthalten, wobei Gehalte von 0,003 bis 0,02 Gew% optimal sind.

Bei einer bevorzugten Ausführungsform wird für die Wärmetauscher-Profile eine Aluminiumlegierung mit folgenden Legierungsanteilen eingesetzt:

0.06 Gew% Silizium
0.15 Gew% Eisen
0.08 Gew% Kupfer
0,55 Gew% Mangan
insgesamt maximal 0,04 Gew% Magnesium, Chrom, Titan, Zink (einzeln maximal 0,03 Gew%)
Rest Aluminium.

Die gewählte Aluminiumlegierung für das Wärmetauscher-Profil enthält gemäß der angegebenen Formel gewichtete Anteile an den gelösten Legierungselementen Kupfer und Mangan. Beide Elemente haben zusammen einen Einfluss auf das freie Korrosionspotential und damit auf dem Korrosionsschutzwert des Aluminiumwerkstoffs des Profils des Wärmetauschers. Für den Fall, dass die für den Korrosionsschutz vorgesehene Beschichtung des Wärmetauschers versagt, bietet dieser Aluminiumwerkstoff für das Profil des Wärmetauschers einen verbleibenden Restkorrosionsschutz. Es hat sich gezeigt, dass dieser Restkorrosionsschutz bei Korrosionsschutzäquivalenten $c_{äquivalent} \geq 0,45\%$ gewährleistet ist.

Zusätzlich ist bei dem korrosionsgeschützten System für den Wärmetauscher eine verbesserte Flussmittelmischung vorgesehen. Die Profile des Wärmetauschers sind in bekannter Weise mit den Lamellen und mit den Sammlern über eine Hartverlötung verbunden. Für diese Hartverlötung werden insbesondere die Profile mit einer Beschichtung versehen, welche ein Lot auf Basis von Silizium in elementarer oder gebundener Form enthält sowie ein Alkalimetallfluormetallat als Flussmittel. Des Weiteren ist in der Beschichtung zur Erhöhung des Korrosionsschutzes Zink in elementarer oder gebundener Form vorgesehen. Es hat sich gezeigt, dass sich bei der Verwendung einer neuen Flussmittelmischung aus einem oder mehreren Kaliumfluormetallaten und ein oder mehreren Lithiumfluormetallaten, vorzugsweise in einem Verhältnis von 95 Gew% Kaliumfluormetallat und 5 Gew% Lithiumfluormetallat eine verbesserte Tolerierung gegenüber Feuchtigkeit ergibt. Derart beschichtete Profile des Wärmetauschers zeigten in Tauchversuchen deutlich verminderte Eintrübungen der wässrigen Tauchlösung.

Neben den vorgenanntem Kaliumfluormetallaten und Lithiumfluormetallaten werden bei einer Ausführung der Erfindung zusätzlich Cäsiumfluormetallate der Flussmittelmischung zugemischt, vorzugsweise 5 bis 40 Gew%. Insbesondere werden diese Cäsiumfluormetallate bei Verwendung von Aluminiumlegierungen mit einem Magnesiumanteil vorgesehen. Ein solches Cäsiumfluormetallat führt zu einer Schmelzpunktreduzierung, was das Flussmittel besser verträglich gegenüber solchen Aluminiumlegierungen macht.

Bei den vorgenannten Alkalimetallfluormetallaten handelt es sich insbesondere um Alkalimetallfluoraluminate und/oder Alkalimetallfluorzinkate und/oder Alkallmetallfluorsilikate und/oder Alkalimetallfluorstannate. Vorzugsweise werden Alkalimetallaluminate eingesetzt. Bei der Verwendung eines Lithiumfluoraluminats in der Flussmittelmischung hat sich gezeigt, dass durch den Zusatz des Lithiumfluoraluminats das Aufbrechen der Aluminiumoxidoberfläche in besonders kleine feine Teile erfolgt, die leicht von der Oberfläche verdrängt werden können und dann zum Verlöten eine gereinigte, besonders glatte Aluminiumoberfläche zur Verfügung steht. Es ist ein vergleichsweise geringer Anteil an Flussmitteln als Beschichtung auf der Oberfläche des Wärmetauscher-Profils einsetzbar, nämlich eine Flussmittelmenge (ohne Binder) von 2 bis 10 g/m², vorzugsweise 3 bis 5 g/m², was zusätzlich den Anteil an verbleibenden Flussmittelresten mit möglichen wasserlöslichen Phasen verringert.

Für eine trockene Befluxung wird ein Flussmittel mit einer mittleren Partikelgröße von 50 μm ausgewählt. Selbstverständlich kann die Partikelgröße an die Auftragungsart angepasst werden. Zur Verwendung des Flussmittels für Flussmittelpasten oder Suspensionen werden wesentlich kleinere Partikel verwendet.

Die auf das Profil aufgetragene Gesamtschicht enthält neben dem Flussmittel (mit oder ohne Binder) Lot sowie Zink in elementarer oder gebundener Form. Von einer solchen Beschichtung werden weniger als 20 g/m² auf die Oberfläche des Profils aufgebracht, vorzugsweise 8 bis 20 g/m², besonders bevorzugt 10 bis 16 g/m². Neben dem Anteil an Flussmittel von 2 bis 10 g/m², vorzugsweise 3 bis 5 g/m². welcher sich durch Zusätze an Binder erhöhen kann, sind 2 bis 6 g/m² an Lot. vorzugsweise 2 bis 4 g/m², vorgesehen. Das Lot ist ein auf Silizium basierendes Lot, vorzugsweise Silizium-Pulverpartikel oder Partikel einer übereutektischen AlSi-Legierung, wie beispielsweise einer AlSi(13-35)-Legierung. Für eine trockene Beschichtung sind Lotpartikel mit einer Partikelgröße im Bereich von 2 bis 25 μm, vorzugsweise 10 bis 20 μm von Vorteil. Größere Partikel führen in bekannter Weise zu Erosionserscheinungen der Aluminiumoberfläche. Kleinere Partikel sind für trockene Auftragungsverfahren von Nachteil.

Die Beschichtung der Profile enthält in bekannter Weise Zink in elementarer und gebundener Form. Vorzugsweise wird für die trockene Beschichtung Zink als Zink-Pulver oder als Kaliumfluorzinkat zugesetzt, wobei in der auf dem Profil aufgetragenen Schicht nur 0,5 bis 6 g/m² Zink, vorzugsweise 1 bis 3 g/m² Zink. nach dem Löten enthalten sind. Das ist weniger als bei bekannten Beschichtungssystemen, wo Mengen an Zink und Flussmittel in der Regel im Verhältnis von 2 : 3 aufgetragen werden. Bei dem neuen korrosionsgeschützten System für Wärmetauscher kann der Anteil an Zink auf einen Anteil von Zink zu Flussmittel im Verhältnis 1 : 3 reduziert werden. Der vergleichsweise geringe Anteil an Zink ist ausreichend, zum einen aufgrund der Reduzierung von Korrosionserscheinungen durch den Anteil von Lithiumfluormetallat im Flussmittel und zum anderen durch den erhöhten Restkorrosionsschutz des verwendeten Aluminiumlegierungsmaterials für das Profil.

Bei dem Profil handelt es sich vorzugsweise um ein stranggepresstes Hohlprofil, insbesondere um ein stranggepresstes Multikammerhohlprofil (MMP-Profil). Für die Herstellung von Kraftfahrzeug-Wärmetauschern werden bevorzugt stranggepresste Micro-Multikammerhohlprofile (MMP-Profile) eingesetzt.

Das Beschichtungsmaterial, nämlich Flussmittel, Lot und der Zinkkorrosionsschutz, kann unmittelbar nach dem Strangpressen, also direkt auf den stranggepressten Profilstrang aufgesprüht werden. Dabei können die Komponenten für die Hartverlötung, nämlich das Lot, Flussmittel und die Zinkkomponente separat oder als Mischung aufgesprüht werden.

Zusätzlich kann die aufgebrachte Beschichtungsmischung je nach Auftragungsart 10 bis 30% Binder in der Mischung enthalten, die ein Anhaften der Lot- und Flussmittelpartikel unterstützen. Solche Binder können Partikel aus Ethylcellulosen, Polyurethanen, Polyacrylaten, Poly(meth)acrylaten, Polyaminen, Polyvinylalkoholen oder auch Verdik-ker, wie Gelantine, Polyethylenglykol oder Pinienharz sein. Da der Binder nicht zum Korrosionsschutz beiträgt, sind minimale Anteile an Bindern bevorzugt, insbesondere 10 bis 20 Gew% Binderpartikel in der Mischung zur Beschichtung der Wärmetauscherkomponenten aus Aluminium und Aluminiumlegierungen für die Hartverlötung.

Eine weitere Möglichkeit besteht darin, das Flussmittel, Lot und die Zinkkomponente in einem Walzenauftragsverfahren (roll coating) nass, beispielsweise in Form einer Suspension oder Aufschlämmung, auf die Komponenten des Wärmetauschers aufzutragen. Auch eine Plasmabeschichtung, wie in dem deutschen Gebrauchsmuster DE202005004807.0 beschrieben. kommt in Frage.

**Patentansprüche**

1. Korrosionsgeschützes System für einen Wärmetauscher mit mehreren parallel zueinander angeordneten Profilen, welche endseitig in je einen Sammler münden sowie mit zwischen den Profilen angeordneten Lamellen,
   wobei die Profile, die Lamellen und die Sammler aus unterschiedlichen Aluminiumlegierungen bestehen, nämlich die Aluminiumlegierung für die Profile edler ist als die Aluminiumlegierung für die Sammler und diese wiederum edler ist als die Aluminiumlegierung für die Lamellen,
   wobei die Profile mit den Lamellen und mit den Sammlern über eine Hartverlötung verbunden sind und die Profile für diese Hartverlötung mit einer Beschichtung versehen sind, wobei die Beschichtung ein Lot auf der Basis von Silizium in elementarer oder gebundener Form enthält sowie ein Alkalimetallfluormetallat als Flussmittel und wobei die Beschichtung der Profile zur Erhöhung des Korrosiosschutzes des Weiteren Zink in elementarer oder gebundener Form enthält,
   **dadurch gekennzeichnet,**

**dass** das Profil aus einer 3xxx-Alumium-Legierung besteht, bei welcher $c_{CU}$ der Anteil an gelöstem Kupfer in der Legierung und $c_{Mn}$ der Anteil an gelöstem Mangan in der Legierung ist, wobei ein Korrosionsschutzäquivalent $c_{äquivalent}$ eingehalten wird, für welches gilt

$$c_{äquivalent} = ( 1,2 \text{ x } c_{CU} ) + ( 1,0 \text{ x } c_{Mn}) \geq 0,45 \text{ \%}$$

und
wobei das Flussmittel eine Mischung aus einem Kaliumfluormetallat und Lithiumfluormetallat ist.

2. System nach Anspruch 1, **dadurch gekennzeichnet, dass** eine 3xxx-Alumium-Legierung eingesetzt wird, bei welcher der Anteil an Kupfer ($c_{Cu}$) in der Legierung 0 bis 0,55 Gew% und der Anteil an Mangan ($c_{Mn}$) in der Legierung 0,40 bis 1,00 Gew% beträgt.

3. System nach Anspruch 1 oder 2, **dadurch gekennzeichnet, dass** das Flussmittel eine Mischung aus 95% Kaliumfluormetallat und 5% Lithiumfluormetallat enthält.

4. System nach Anspruch 3, **dadurch gekennzeichnet, dass** das Flussmittel zusätzlich Cäsiumfluormetallat enthält, vorzugsweise 5 bis 40 Gew% Cäsiumfluormetallat im Flussmittel enthalten ist.

5. System nach Anspruch 3 oder 4, **dadurch gekennzeichnet, dass** weniger als 20 g/m$^2$ Beschichtung aus Lot, Flussmittel und Zink auf der Oberfläche des Profils aufgebracht sind, vorzugsweise 10 bis 16 g/m$^2$, wobei Beschichtung auf der Oberfläche des Profils 2 bis 10 g/m$^2$ Flussmittel enthält, vorzugsweise 3 bis 5 g/m$^2$.

6. System nach einem der Ansprüche 1 bis 5, **dadurch gekennzeichnet, dass** das Kalium, Lithium, Cäsium als Alkalimetall enthaltende und eingesetzte Alkalimetallfluormetallat ein Alkalimetallfluoraluminat und/oder ein Alkalimetallfluorzinkat und/oder Alkalimetallfluorsilikat und/oder Alkalimetallfluorstannat ist, vorzugsweise ein Alkalimetallaluminat.

7. System nach einem der Ansprüche 1 bis 6, **dadurch gekennzeichnet, dass** das Silizium als Si-Pulverpartikel oder als übereutektische AlSi-Legierungspartikel in der Beschichtung zur Hartverlötung mit 2 bis 6 g/m$^2$ enthalten ist, wobei die Partikel eine Partikelgröße von 2 bis 25 $\mu$m besitzen und wobei vorzugsweise die Lot-Partikel einer AlSi (13-35)-Legierung als Legierungspartikel in der Beschichtung enthalten sind.

8. System nach einem der Ansprüche 1 bis 7, **dadurch gekennzeichnet, dass** das Zink als Zn-Pulverpartikel oder als Kaliumfluorzinkat in der Beschichtung mit 0,5 bis 6 g/m$^2$ enthalten ist, vorzugsweise mit 1 bis 3 g/m$^2$.

9. System nach einem der Ansprüche 1 bis 8, **dadurch gekennzeichnet, dass** das Profil ein stranggepresstes Hohlprofil, vorzugsweise ein Multikammerhohlprofil (MP-Profil), besonders bevorzugt ein Micro-Multikammerhohlprofil (MMP-Profil) ist.

10. Trockene Mischung zur Beschichtung für die Hartverlötung von Wärmetauscher-Komponenten aus Aluminium oder Aluminiumlegierungen enthaltend eine Mischung aus Kaliumfluormetallat und Lithiumfluormetallat und des Weiteren enthaltend Silizium und Zink in elementarer oder gebundener Form.

11. Mischung nach Anspruch 10, **dadurch gekennzeichnet, dass** die Mischung zusätzlich Cäsiumfluormetallat enthält.

12. Mischung nach Anspruch 10 oder 11, **dadurch gekennzeichnet, dass** die in der Mischung enthaltenen Alkalimetallfluormetallate ein oder mehrere der nachfolgenden Verbindungen sind, nämlich Alkalimetallfluoraluminat und/oder Alkalimetallfluorzinkat und/oder Alkalimetallfluorsilikat und/oder Alkalimetallfluorstannat, vorzugsweise wird ein Alkalimetallaluminat eingesetzt, wobei vorzugsweise die Partikel des Alkalimetallfluormetallats eine mittlere Partikelgröße von 50 $\mu$m besitzen.

13. Mischung nach einem der Ansprüche 10 bis 12, **dadurch gekennzeichnet, dass** das Silizium als Si-Pulverpartikel oder als übereutektische AlSi-Legierungspartikel in der Mischung zur Hartverlötung enthalten ist, wobei die Partikel eine Partikelgröße von 2 bis 25 $\mu$m besitzen.

14. Mischung nach einem der Ansprüche 10 bis 13, **dadurch gekennzeichnet, dass** das Zink als Zn-Pulverpartikel oder als Kaliumfluorzinkat in der Mischung enthalten ist.

15. Mischung nach einem der Ansprüche 10 bis 14, **dadurch gekennzeichnet, dass** 10 bis 30 % Binder in der Mischung enthalten sind, beispielsweise Partikel von Ethylcellulosen, Polyurethanen, Polyacrylaten, Poly(meth)acrylaten, Polyaminen, Polyvinylalkoholen und Verdickern wie Gelatine, Polyethylenglykolen oder Pinienharzen, vorzugsweise weniger als 20%.

**EP 2 532 471 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005004807